(19) Europäisches Patentamt
European Patent Office
Office européen des brevets

(11) EP 1 942 623 A1

(12) EUROPEAN PATENT APPLICATION

(43) Date of publication:
09.07.2008 Bulletin 2008/28

(51) Int Cl.:
*H04L 27/26* (2006.01)

(21) Application number: 07000278.7

(22) Date of filing: 08.01.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: Siemens Networks GmbH & Co. KG
81541 München (DE)

(72) Inventor: Chmiel Mieszko
48-340 Glucholazy (PL)

(74) Representative: Maier, Daniel Oliver et al
Siemens AG
CT IP Com E
Postfach 22 16 34
80506 München (DE)

(54) **Method for data transmission using a block guard interval, subscriber and system**

(57)   The present invention relates to a method for multi-carrier data transmission within a cell-based communication system, comprising the steps: providing for data transmission purposes between a first and second subscribers a corresponding communication link, wherein the second subscribers are located within the same cell of the system and wherein during the data transmission a frame-based multi-carrier signal is send from one subscriber to the other utilizing the communication link, and providing at least two different guard intervals for the different communication links within the same cell to reduce cross-talks between the sub-carriers.. The present invention further relates to a subscriber and system for data transmission.

FIG 4

EP 1 942 623 A1

## Description

FIELD OF THE INVENTION

The present invention relates to a method for multi-carrier data transmission within a cell-based communication system using a block guard interval. The present invention further relates to a subscriber and system for data transmission.

TECHNICAL BACKGROUND OF THE INVENTION

In modern telecommunication, high bit rate data transmission plays an increasing role, particularly because it promises a greater usable bandwidth of the data to be transmitted. A technology increasingly gaining importance in recent times is the so-called multi-carrier data transmission, also known as "discrete multi-tone transmission" (DMT) or as "orthogonal frequency division multiplexing" transmission (OFDM). Such data transmission methods are used, for example, in wired transmission systems but also in wireless transmission systems in the radio domain for broadcast systems, for access to data networks and for wireless communication applications.

In wireless communication systems, data (for example, voice data, image data or other digital data) are transmitted by means of electromagnetic waves via a wireless interface. A wireless communication system typically comprises a common base station and one or more mobile stations (or mobile subscriber or members) which are connected to the base station via a wireless radio link and which provides multiple access. This access to these mobile stations can be performed in a different manner, e. g. by:

- time division multiple access (TDMA);
- frequency division multiple access (FDMA);
- code division multiple access (CDMA);
- space division multiple access (SDMA).

One representative of a multi-carrier data transmission is the so-called orthogonal frequency division multiplexing (OFDM) transmission. Here, the data transmission is typically carried out in symbols using orthogonal, frequency-separated sub-carriers by modulating during the period of one symbol parallel data on these sub-carriers.

For multi-carrier data transmission, the real time and value discrete digital signal to be transmitted is composed of individual frames which are predetermined in their duration. Each frame contains a fixed number of sub-frames containing one or more symbols which are the result of an inverse fast Fourier transformation (IFFT) which to a certain extent contain the transmit data. This transmit data within a subframe which is distributed over individual carrier frequencies forms the data symbol whereas the last (or the first) values of each data symbol are additionally inserted within the same sub-frame in each case before (or behind) this data symbol to be transmitted. These values form a so-called cyclic prefix which is typically predetermined by the transmission standard. In other words, the cyclic prefix forms a replica of a part of the data symbol to be transmitted.

Using multi-carrier data transmission so-called inter-symbol interferences (ISI) and inter-carrier interferences (ICI) may occur. One possibility to avoid these interferences is to use orthogonal frequency separated sub-carriers like the one in an OFDM-based communication system. However, cross-talks between the sub-carriers, typically when the respective sub-carriers are not orthogonal to each other may occur. Another possibility to avoid or even to completely eliminate these undesired inter-symbol interferences is the incorporation of a cyclic prefix.

The main benefit of using this cyclic prefix is to make sure that adjacent OFDM symbols do not interfere with each other and their sub-carriers do not show crosstalks if a cyclic prefix which is long enough is chosen. That means that a cyclic prefix within a communication link has to be chosen which should be at least as long as the maximum delay spread within this communication link.

However, the incorporation of cyclic prefixes also shows some drawbacks. The incorporation of a cyclic prefix leads to a reduction of the data volume.

Furthermore, a considerable part of the transmission power is used to send the cyclic prefix which is especially in mobile communication undesired.

As a consequence of this, typically different cyclic prefixes are needed. Therefore, in mobile multi-carrier communication systems, typically cyclic prefixes with different durations are used. However, the amount of different cyclic prefixes and their duration (length) varies in the down-link and the up-link:

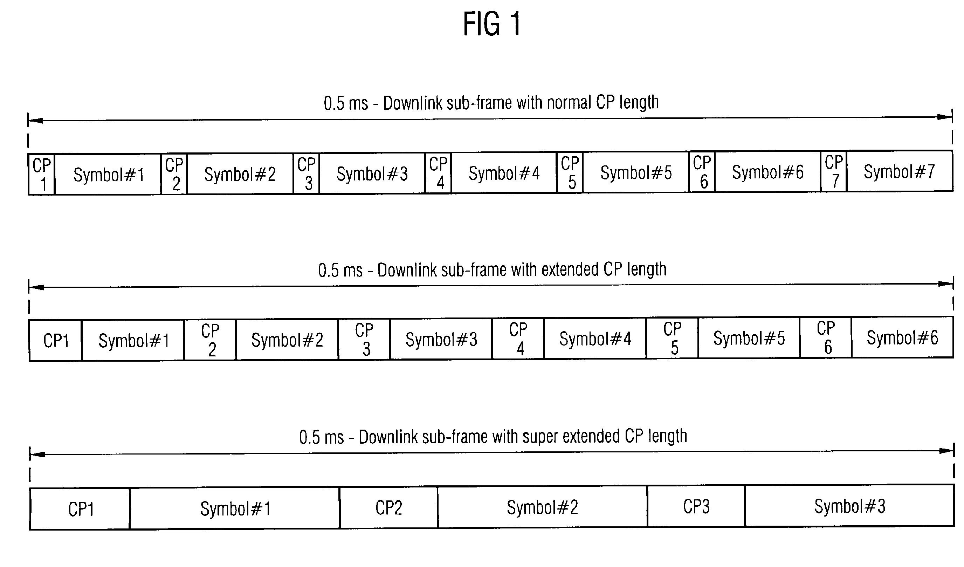

In a down-link communication, such as a unicast transmission (point-to point) or a broadcast/multicast transmission, for example, normal cyclic prefix durations of around 5 $\mu$sec are used. Besides to the normal cyclic prefix an additional extended cyclic prefix having a duration of around 16 $\mu$sec. may be used. Especially in a broadcast/multicast transmission, an super-extended cyclic prefix having a duration of around 33 $\mu$sec is used. In addition, it is also considered to mix the normal and extended cyclic prefixes within one cell. The only considered scenario for this option of mixing cyclic prefixes is the usage of the normal cyclic prefix for unicast transmission due to short delay spread while the extended cyclic prefix is used for broadcast/multicast transmission to enable operations between multiple cell/base stations, even though each of the cells separately may have a relatively short delay spread. However, within the same cell of the communication system the cyclic prefix is fixed to one of the above mentioned durations (see figure 1) .

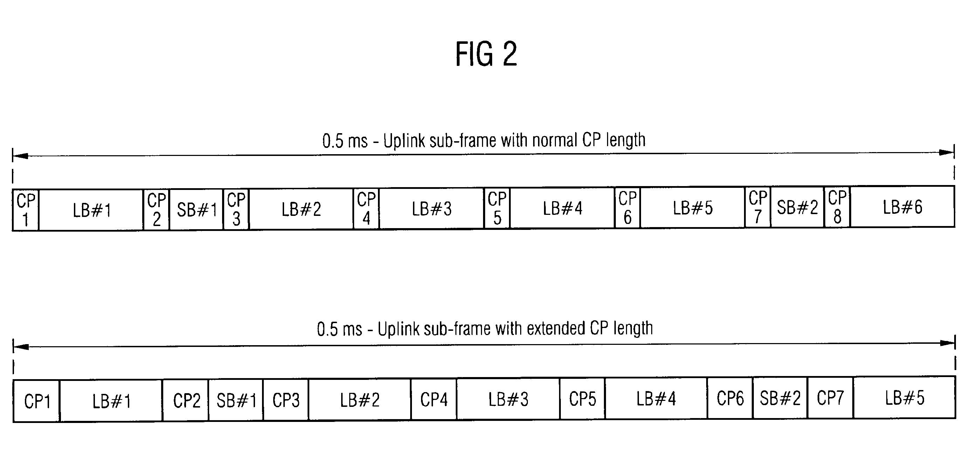

In an up-link communication besides the normal cyclic prefix having a duration of around 4 $\mu$sec, an extended cyclic prefix having a duration of about 14 $\mu$sec

may be used. Here, the normal and the extended cyclic prefixes are used in cells with short and long delay spread profiles, respectively (see figure 2) .

In summary, within one cell of a wireless communication system, only one and the same cyclic prefix having a fixed duration is used as well in the down-link and the up-link. However, using only one prefix duration per cell is suboptimal because of the following reason:

In the first instance, the delay spread of a communication link highly depends on the distance between the mobile subscriber and the base station. Typically, the different mobile subscribers within one cell are more or less distributed across this cell. As a consequence of this, different mobile subscribers have different delay spread profiles.

Moreover, especially in the case that the distance is low (e.g. 5 km) and the attenuation is also low (e.g. less than 5 dB), more than 50 % of all mobile subscribers within this cell will operate with a relatively low delay spread of less than 5 $\mu$sec. In this case, the delay spread can be easily covered by a normal cyclic prefix of around 5 $\mu$sec, while the rest of the mobile subscribers within this cell will need a longer delay spread requiring at least the extended cyclic prefix. To be on the safe side, typically only extended cyclic prefixes are used in this case. However, using only extended cyclic prefixes in a cell will reduce the throughput of those mobile subscribers which do not need this extended cyclic prefix. On the other hand, using only the short cyclic prefix within a cell will result in undesired inter-symbol interferences of mobile subscribers with relatively long delay spread profiles.

For this reason, there exists the need to provide an adaptation of a guard interval (or a cyclic prefix) on the particular circumstances of an up-link and/or a down-link.

The present invention, therefore, is based on the object of providing a more effective method and system for adapting the duration of a cyclic prefix on the particular circumstances of a communication link.

SUMMARY OF THE INVENTION

In accordance with the present invention, a method for data-transmission having the features of claim 1 and/or a subscriber having the features of claim 17 and/or a system having the features of claim 24 are provided.

Accordingly it is provided:

A method for multi-carrier data transmission within a cell-based communication system, comprising the steps: providing for data transmission purposes between a first and second subscribers a corresponding communication link, wherein the second subscribers are located within the same cell of the system and wherein during the data transmission a frame-based multi-carrier signal is send from one subscriber to the other utilizing the communication link, and providing at least two different guard intervals for the different communication links within the same cell to reduce cross-talks between the sub-carriers.

A subscriber of a cell-based multi-carrier communication system which is designed to communicate with at least one other subscriber of the same communication system by utilizing a method according to the present invention.

A cell-based multi-carrier communication system, comprising: a first and at least a second subscriber designed to communicate with each other via a corresponding communication link, wherein at least one of the first and second subscribers are of the kind of a subscriber according to the present invention.

The present invention is directed on multiplexing sub-frames within a communication frame between a base station and a mobile subscriber terminal having variable cyclic prefix durations in their communication link.

According to the present invention, the method for multiplexing different mobile subscribers within one cell using different cyclic prefixes in one cell is outlined together with a method that decides which one of the cyclic prefix durations should be used by a mobile subscriber in a given communication link.

The advantages of the method and system according to the present invention are the following:

The throughput of a communication link within a given cell of a communication system using adjusted durations of the guard interval is maximized while the inter-symbol interferences are minimized by adapting the length of the guard interval to individual delay spreads.

If a determination of a propagation delay is applied to determine whether a first or a second extended duration of a guard interval is used, no additional measurements need to be defined since the anyway available measurement of the propagation delay can be re-used for this task.

Further, no additional signalling needs to be defined since the time alignment control feedback with predefined implicit rules can be re-used.

Sounding reference signals are orthogonally multiplexed in the same transmitted signals and between different mobile subscribers with various durations of the guard interval.

Additional functionalities within a mobile subscriber can also be implemented without departing from the present invention.

Advantages, embodiments and further developments of the invention can be found in the further subclaims and in the description, referring to the drawings.

According to a preferred embodiment

According to a preferred embodiment a first guard interval has a first duration and at least a second guard interval has a second duration are provided, wherein the first duration is smaller than the second duration.

According to a preferred embodiment the decision whether a communication link is assigned to a guard interval having the first or the second duration is made on the basis of the distance between the corresponding second subscriber and the first subscriber.

According to a preferred embodiment the distance is determined on the basis of a signal delay of the transmitted multi-carrier signal.

According to a preferred embodiment a round trip propagation delay of a signal within a communication link is applied to determine the distance between the corresponding second subscriber and the first subscriber.

According to a preferred embodiment a delay threshold, preferably a settable delay threshold value is provided to determine whether a communication link is assigned with the first or the second guard interval.

According to a preferred embodiment a communication link is assigned the first guard interval having the first duration if the determined delay is less that the delay threshold value and a communication link is assigned the second guard interval having the second duration if the determined delay is bigger that the delay threshold value.

According to a preferred embodiment the distance between the second subscriber and the first subscriber is determined on the basis of a path-loss measurement of a transmitted signal in the corresponding communication link.

According to a preferred embodiment the distance between the second subscriber and the first subscriber is determined on the basis of a location measurement of the second subscriber by the first subscriber.

According to a preferred embodiment the guard interval is a cyclic prefix.

According to a preferred embodiment the communication between the first and the second subscriber is an up-link communication.

According to a preferred embodiment each frame is reserved for a communication between one first subscriber and one or more second subscribers within the same cell of the communication system.

According to a preferred embodiment each frame comprises a fixed number of subframes having the same length and wherein a sub-frames contains one or more symbols which are the result of an inverse fast Fourier transform which contains the data to be transmitted.

According to a preferred embodiment each of the sub-frames comprises at least one guard interval and/or each subframe comprises a slot and each of the slots comprises one guard interval.

According to a preferred embodiment the subscriber is a stationary subscriber and especially a base station of the telecommunication system.

According to a preferred embodiment the subscriber is a mobile subscriber and especially a mobile cell phone.

According to a preferred embodiment an evaluation device is provided to determine the distance to and/or signal delay between a first and a second subscriber.

According to a preferred embodiment a comparing device is provided to compare the determined delay with a fixed delay threshold value.

According to a preferred embodiment a setting device is provided to set the duration of the guard interval used within this communication link.

According to a preferred embodiment the functionality of the evaluation device, comparing device and setting device are implemented in a program controlled device.

According to a preferred embodiment the communication system is a wireless communication system and especially a wireless UTRA-system.

According to a preferred embodiment the communication system operates on the basis of an orthogonal FDMA-communication.

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Figure 1: shows three within a given down-link communication sub-frames different symbols and having different cyclic prefix durations;

Figure 2: shows two sub-frames within a given up-link communication link having different symbols and with two different cyclic prefix durations;

Figure 3: shows a block diagram of an exemplary communication system according to the present invention;

Figure 4: shows a diagram for illustrating the configuration of a cyclic prefix according to the present invention within one cell of the communication system of figure 3 depending on the distance of the mobile subscribers;

Figure 5: shows a schematic diagram of the communication links between the mobile subscriber and the base station of figure 3 according to the present invention.

In all figures of the drawings, elements, features and signals which are the same or at least have the same functionality have been provided with the same reference symbols, unless explicitly stated otherwise.

DETAILED DESCRIPTION OF PREFERRED EMBODIMENTS OF THE INVENTION

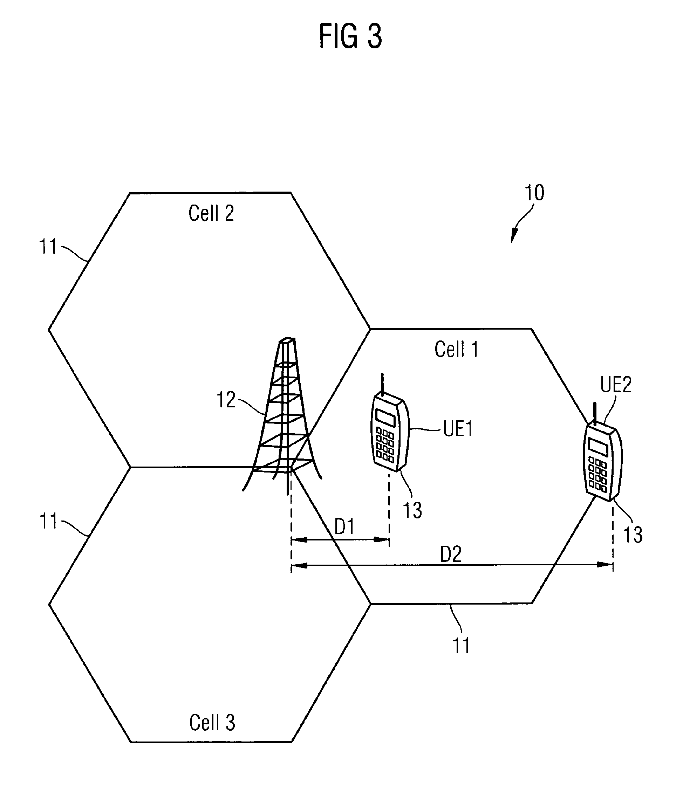

Figure 3 shows a block diagram of an exemplary communication system according to the present to illustrate the common problem of the present invention.

In this case, the communication system is denoted by reference symbol 10. Figure 3 only shows a section of this telecommunication system 10. This telecommunication system 10 may be part of a wireless telecommunication network, such as a GPS-, GPRS-, UMTS-, etc. network.

The telecommunication system 10 is cell-based and therefore comprises a plurality of different cells 11, wherein in figure 3 only three of these cells 11 (Cell1 - Cell3) are shown. The common intersection point between these three cells 11 defines a common node 12. This common node 12 comprises a stationary subscriber, for example, a base station. This base station 12 is designed to establish communication links to one or more subscribers which are arranged within one or more of the cells 11 of the telecommunication system 10.

In the case in figure 3, one of the cells 11 comprises two different subscribers 13 which are denoted by reference symbols UE1, UE2. These subscribers 13 are mobile subscribers 13, such as a mobile cell phone, a portable modem and so on.

Both of these mobile subscribers 13 are arranged within the same cell 11 (i.e. cell1) of the telecommunication system 10.

In the example in figure 3, the first mobile subscriber UE1 is arranged nearer to the base station 12 than the second mobile subscriber UE2. That means that a distance D1 between the first mobile subscriber UE1 and the base station 12 is lower than a second distance D2 between the second mobile subscriber UE2 and the base station 12.

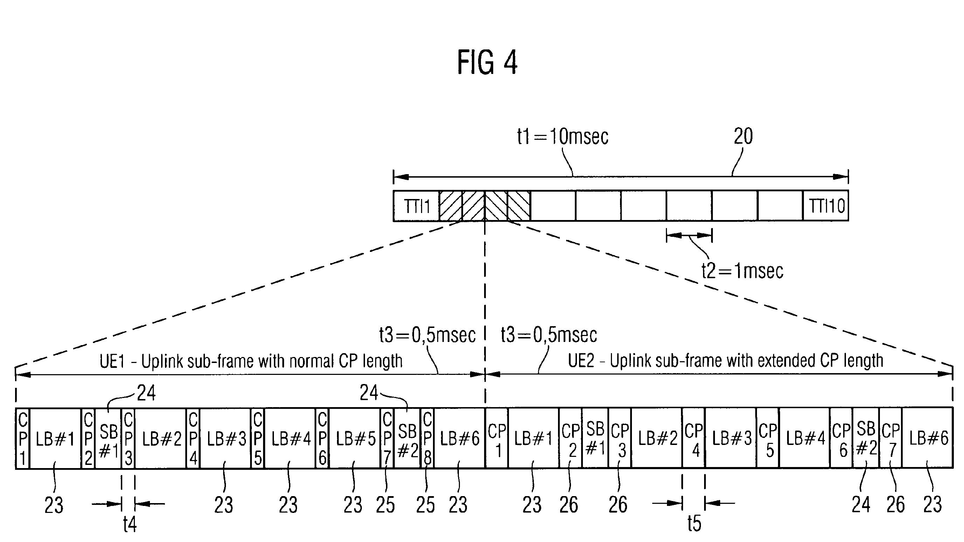

Figure 4 shows a diagram for illustrating the configuration of a cyclic prefix within one cell of the communication system of figure 3 depending on the distance of the corresponding mobile subscribers.

Figure 4 shows a frame 20, for example a frame 20 of an up-link communication between one or more mobile subscribers 13 and the corresponding base station 12. This frame 20 comprises altogether ten sub-frames 21 whereas each one of the sub-frames 21 in turn comprises two slots 22. In the case of figure 4, the duration t1 of a frame 20 is t1 = 10 msec. Since each one of the sub-frames 21 within the frame 20 has the same length, the duration t2 of a sub-frame 21 is t2 = 1 msec and thus the duration t3 of a single slot 22 is t3 = 0,5 msec.

Each one of the sub-frames 21 is reserved for a communication between one of the mobile subscribers 13 within a specific cell 11 and the base station 12. That is, that within one frame 20 it is possible to establish altogether ten communication links between ten (different or identical) mobile subscribers 13 and the base station 12. In figure 4, the different sub-frames 21 are denoted by reference symbols TTL1 - TTL10. Here, it is assumed that the second sub-frame 21 TTL2 is directed to a communication link between the first mobile subscriber UE1 and the base station 12, whereas the third sub-frame TTL3 is directed to a communication link between the second mobile subscriber UE2 and the base station 12.

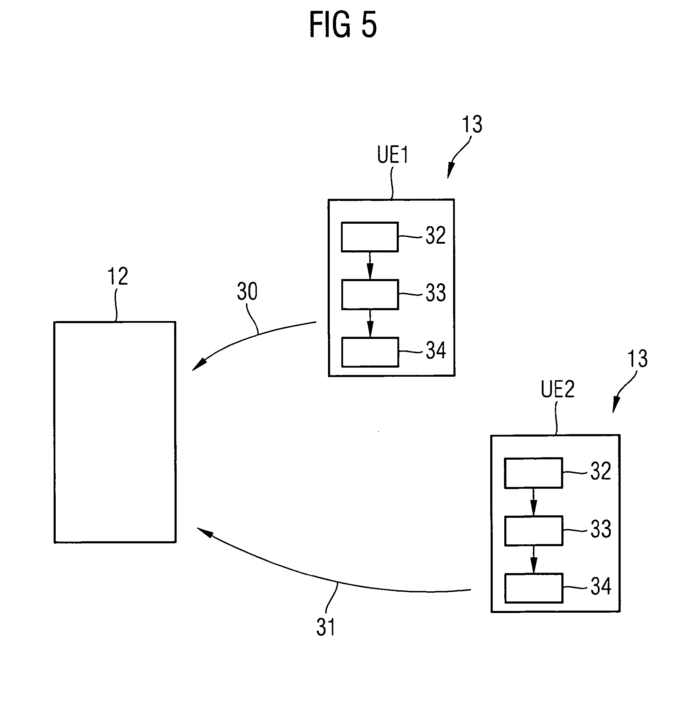

Figure 5 shows a schematic diagram of the communication links between the mobile subscriber 13 and the base station 12 of the communication system 10 in figure 10. Here, the communication link between the first subscriber UE1 and the base station 12 is denoted by reference symbols 30 and the communication link between the second subscriber UE2 and the base station 12 is denoted by reference symbol 31. It is further assumed that these communication links 30, 31 are so-called up-links for the transmission of signals from the mobile subscribers 13 towards the base station 12.

According to the present invention, the mobile subscribers 13 comprise an evaluation device 32. This evaluation device is designed to determine the distances D1, D2 between the corresponding mobile subscribers 13 and the base station 12. The determination of these distances D1, D2 may be performed in a different manner. One example for determining the distances D1, D2 may be on the basis of a calculation of the round trip propagation delay TA. The round trip propagation delay TA is defined as follows:

$$TA = 2*D/C,$$

wherein D defines the distance between a subscriber 13 and a base station 12 communicating and C defines the velocity of light. Here, TA defines the one-way propagation delay, which is the time a signal needs to be transmitted from the mobile subscriber 13 and to be received at the base station 12.

Then, the delay spread TA can be calculated according to a model which is described in L. J. Greenstein, et al., "A New Path-Gain/Delay-Spread propagation model for digital cellular channels", IEEE Trans. Veh. Technol., vol. 46, no. 2, pp. 477-485, May 1997. By determining the delay spread also the distance D between a subscriber and a base station is known.

Each one of the subscribers 13 further comprises a comparing device 33, such as a simple comparator. Within this comparing device 33, the determined round trip propagation delay TA, e.g. determined by the evaluation device 32, is compared with a given, fixed threshold value TAX. Depending, whether the determined propagation delay TA is lower than or greater than this threshold value TAX, a setting device 34 within a subscriber 13 sets a duration of cyclic prefix used within this communication link 30, 31 and the corresponding sub-frame, respectively.

Typically, but not necessarily the functionality of the evaluation device 32, comparing device 33 and setting device 34 are implemented in a programmable device, such as a micro controller or micro processor or a hardwired logic device, such as PLD or FPGA. Since a mobile subscriber anyway comprises such a programmable device, the functionality of the devices 32-34 may be very easily implemented also within this programmable device.

To show this with regard to the example in figure 4, the propagation delays TA1, TA2 between the subscribers UE1, UE2 are calculated on the basis of the following equations:

$$TA1 = 2 * D1/C$$

$$TA2 = 2 * D2/C$$

It is assumed that the propagation delay TA1 is lower and the propagation delay TA2 is greater than the fixed threshold value TAX:

$$TA1 < TAX$$

$$TA2 > TAX$$

As a consequence of this, in the communication link 30 of the subscriber UE1 only normal cyclic prefixes 25 are transmitted in the corresponding sub-frames TTL2 or slots 22, whereas in the communication link 31 of the subscriber UE2 having a greater distance D2 to the base station 12 only extended cyclic prefixes 26 are transmitted within the sub-frame TTL3 or slots 22.

In the slots 22 of both sub-frames TTL2, TTL3 altogether six data symbols 23 (LB#1 - LB#6) having a given length and two data symbols 24 (SB#1, SB#2) also having a given length are provided. Between each adjacent data symbols 23, 24 one cyclic prefix 25, 26 is provided. According to the present invention within the sub-frame TTL2, the duration (length) t4 of the cyclic prefix 25 is shorter than the duration (length) t5 of a cyclic prefix 26 within the sub-frame TTL3. That means, there is no longer a fixed cyclic prefix assigned to the different communication links 30, 31 within a given cell 11. That also means, depending on the distances D1, D2 between the subscribers UE1, UE2 the corresponding cyclic prefixes 25, 26 are adapted according to this distances D1, D2.

In fact, the decision if a first, short cyclic prefix 25 or a second, extended cyclic prefix 26 should be used is based on the time advance of a signal transmitted from the corresponding subscriber 13 towards the base station 12. There is no explicit signal required to perform the controlling of this determination of the length of a determined cyclic prefix.

Besides the determination of the propagation delay TA on the basis of the delay spread propagation model, the method according to the present invention also works with other delay spread estimation methods like a path-loss measurement of a signal in the communication link (path) between the subscriber 13 and the base station 12 or on the basis of a location measurement of the subscriber within the base station 12 (not shown in the drawing).

A further embodiment for the determination of the length of the cyclic prefix 25, 26 is based on a control signal (not shown in the drawing). Here, in contrast to the above mentioned embodiment using the delay spread, the decision whether a short or an extended cyclic prefix 25, 26 should be used is based on the time advance of a signal transmitted from the subscriber 13 to the corresponding base station 12. Here, there is explicit a controlling (preferably over the L1/L2 control-channel) between a base station 12 and the corresponding subscriber 13 via the down-link communication necessary to inform the corresponding subscriber 13 whether a short or an extended cyclic prefix 25, 26 should be used within a given sub-frame 21. The maximum rate at which the length of a cyclic prefix can be changed is equal either to the measurement interval of the minimum propagation delay TA at the base station 12 or the maximum time advance of the control signals.

In a further embodiment (not shown in the drawing) similar to the one described above, the decision whether a short or an extended cyclic prefix should be used is based on either the delay spread in the up-link or the RMS-delay spread in the up-link or an inter-symbol interference measurement for the up-link communication at the base station. In this case, additional measurements at the base station are required.

Hereinafter a possible method is described to determine and set the duration of the cyclic prefix depending on the properties of the corresponding communication link:

- In order to adapt to radio conditions with various delay spreads (minimize inter-symbol interference and maximize throughput) in each cell, it is allowed to multiplex mobile subscribers with different cyclic prefix lengths (normal and extended cyclic prefix sub-frames) within a cell:

  TDM multiplexing between up-link transmissions with different cyclic prefix lengths is preferred over FDM- or CDM-multiplexing since in this technique orthogonality between mobile subscribers is maintained. However, FDM-multiplexing between up-link transmissions of different mobile subscribers with the same cyclic prefix length is not excluded. The controlling of resources for sub-frames containing long and short cyclic prefixes is preferably under the control of the base station.

The decision whether the mobile subscriber should transmit the sub-frame having the normal or extended cyclic prefix should be based on the (estimated) up-link delay spread of the mobile subscriber. For this a threshold-based algorithm can be used. Here, three alternative scenarios can be distinguished:

> a) The up-link delay spread of all mobile subscribers within the same cell are less than or equal to a configurable threshold. Then all mobile subscribers use the normal cyclic prefix.

> b) The up-link delay spreads of all mobile subscribers within a cell are grater than a threshold. Then all mobile subscribers use the extended cyclic prefix.

> c) The up-link delay spreads of some mobile subscribers in a cell are less than or equal to a threshold and the up-link delay spread of the other mobile subscribers is greater than the threshold. The first mobile subscribers use the normal cyclic prefix length and the later mobile subscribers use the extended cyclic prefix length.

- The up-link delay spread of each mobile subscriber can be estimate on the basis of either up-link multipath delay spread measurements or (alternatively or additionally) on the basis of time advance measurements available at the base station. The estimation method based on the time advance measurements is preferred because the TA measurement is anyway performed and available at the base station and signaled to the mobile subscriber to maintain uplink orthogonality. Therefore, in this case no additional measurement needs to be defined and performed at the network side for the purpose of multiplexing mobile subscribers with different cyclic prefix lengths.
It should be noted that the final calculation of the round trip propagation delay TA is more accurate if some cells/base stations-specific environmental parameters are fed into this calculation.
- The mobile subscribers and the Communication System should have a common unambiguous view whether the extended or normal cyclic prefix is used in a given transmission. The cyclic prefix duration used by the mobile subscriber in one cell during a connection may change (the maximum frequency of changes is $f = 1/TTL$ (e.g. 1 kHz), where TTL is the duration of a sub-frame).

This can be achieved by signaling (either L1/L2-controlled signaling or higher layer signaling like MAC or RRC) or by providing implicit common rules which are predefined at the mobile subscriber and at the base station, e.g.:

> a) When the delay TA measured by the base station and signaled to the mobile subscriber exceeds a certain threshold both sides know that the extended cyclic prefix will be used in the next uplink transmission. In this case the configurable threshold can be broadcasted by the network on the BCH or a predefined standardized value can be used.

> b) In case the down-link time advance control feedback is very reliable the method based on predefined rules is preferable because it does not require any additional signaling overhead. However, the method based on explicit down-link signaling gives more flexibility and control to the base station.

- It may be beneficial to multiplex the sounding reference signals (pilot signal) from mobile subscribers with different cyclic prefix durations to the same LB-symbol (DFT-SOFDM-symbol) to maintain the orthogonality between the reference signals the following solutions are proposed:

In case the same bandwidth is sounded and the sounding reference signals are CDM-multiplexed between mobile subscribers the sounding reference signal should be located as well in the last LB-symbol (DFT-SOFDM symbol) for the same reason. Thus, the sounding reference signals between mobile subscribers with different cyclic prefix lengths can be orthogonally CDM/FDM multiplexed.

Because the timing of the symbol is cyclic prefix length independent, and the sounding reference signals between mobile subscribers with different cyclic prefix lengths can be orthogonally FDM-multiplexed.

In case multiple bandwidths are sounded and the sounding reference signals are CDM/FDM-multiplexed between mobile subscribers the sounding reference signal should be located in the last LB-symbol

While embodiments and applications of this invention have been shown and described above, it would be apparent to those skilled in the art that many more modifications than mentioned above are possible without departing from the inventive concepts described herein. The invention, therefore, is not restricted except in the spirit of the depending claims.
It is therefore intended that the foregoing detailed description is to be regarded as illustrative rather than limiting and that it is understood that it is the following claims including all equivalents described in these claims that are intended to define the spirit and the scope of this invention. Nor is anything in the foregoing description intended to disavow the scope of invention as claimed or any equivalents thereof.

It is also noted that the above mentioned embodiments and examples should be understood to be only exemplary. That means additional circuit arrangements and functional circuit may be implemented within the base station and/or within one or more of the subscribers.

The present invention is preferably suitable for use within a wireless UTRA-system (UTRA: Universal Terrestrial Radio Access) on the basis of an orthogonal FDMA-communication. However, this invention is not limited on this application, but can also be used in communication systems using a different communication standard, such as a CDMA-based or TDMA-based communication system. Also, the present invention should not be limited on this kind of wireless communication systems, but can be also applied to any other mobile or wired communication systems using a frame and/or slot-based communication with at least two possible, different cyclic prefix durations in the up-link and/or the down-link.

Further, the invention should also not be limited on the adjustment of the duration of a cyclic prefix but can be also used to adjust the duration of any guard interval within a slot or frame-based communication.

Further, the present invention is explicitly not limited to a wireless communication but can also be used in a hardwired communication network, which is, for example, also cell-based.

In one preferred embodiment, the communication link is an up-link for the transmission of a signal between a mobile subscriber and a stationary base station. Also, the present invention is applicable on down-link communications for the transmission of signals from the base station to one or more mobile subscribers.

The above method to adjust the guard interval or cyclic prefix according to the present invention is equally applicable when more than two cyclic prefix lengths are used and defined within one and the same cell.

The above described method is equally applicable in case only LB-symbols (DFT-SOFDM-symbols) are used in the (up-link) sub-frames and the cyclic prefix durations are harmonized between the down-links and up-links.

Also, the invention was described on the basis of two mobile subscribers within one cell. However, it should be clear that also one or more than one mobile subscribers may be present within one cell while the inventive method is still working.

LIST OF REFERENCE SYMBOLS

| 10 | wireless telecommunication system |
| 11 | cells |
| 12 | common node, base station |
| 13 | mobile subscriber (phone) |
| 20 | frame |
| 21 | sub-frames |
| 22 | slots |
| 23, 24 | data symbols |
| 25, 26 | guard interval, cyclic prefix |
| 30, 31 | communication links, up-links |
| 32 | evaluation device |
| 33 | comparing device |
| 34 | setting device |

| UE1, UE2 | mobile subscriber |
| D1, D2 | distances |
| TTL1 - TTL10 | sub-frame |
| t1 - t5 | durations |
| Cell1 - Cell3 | cells |
| LB#1 - LB#6 | data symbols |
| SB#1, SB#2 | data symbols |

**Claims**

1. Method for multi-carrier data transmission within a cell-based communication system, comprising the steps:

   providing for data transmission purposes between a first and second subscribers a corresponding communication link,

   wherein the second subscribers are located within the same cell of the system and wherein during the data transmission a frame-based multi-carrier signal is send from one subscriber to the other utilizing the communication link,
   providing at least two different guard intervals for the different communication links within the same cell to reduce cross-talks between the sub-carriers.

2. Method according to claim 1,
   wherein a first guard interval having a first duration and at least a second guard interval having a second duration are provided, wherein the first duration is smaller than the second duration.

3. Method according to claim 2,
   wherein the decision whether a communication link is assigned to a guard interval having the first or the second duration is made on the basis of the distance between the corresponding second subscriber and the first subscriber.

4. Method according to claim 3,
   wherein the distance is determined on the basis of a signal delay of the transmitted multi-carrier signal.

**5.** Method according to claim 3 or 4,
wherein a round trip propagation delay of a signal within a communication link is applied to determine the distance between the corresponding second subscriber and the first subscriber.

**6.** Method according to any one of claims 2 - 5,
wherein further providing a delay threshold to determine whether a communication link is assigned with the first or the second guard interval.

**7.** Method according to claim 6,
wherein the delay threshold value is settable.

**8.** Method according to claims 6 or 7,
wherein a communication link is assigned the first guard interval having the first duration if the determined delay is less that the delay threshold value and a communication link is assigned the second guard interval having the second duration if the determined delay is bigger that the delay threshold value.

**9.** Method according to any one of claims 3 - 8,
wherein the distance between the second subscriber and the first subscriber is determined on the basis of a path-loss measurement of a transmitted signal in the corresponding communication link.

**10.** Method according to any one of claims 3 - 9,
wherein the distance between the second subscriber and the first subscriber is determined on the basis of a location measurement of the second subscriber by the first subscriber.

**11.** Method according to any one of the preceeding claims,
wherein the guard interval is a cyclic prefix.

**12.** Method according to any one of the preceding claims,
wherein the communication between the first and the second subscriber is an up-link communication.

**13.** Method according to any one of the preceding claims,
wherein each frame is reserved for a communication between one first subscriber and one or more second subscribers within the same cell of the communication system.

**14.** Method according to any one of the preceding claims,
wherein each frame comprises a fixed number of subframes having the same length and wherein a sub-frames contains one or more symbols which are the result of an inverse fast Fourier transform which contains the data to be transmitted.

**15.** Method according to claim 14,
wherein each of the sub-frames comprises at least one guard interval.

**16.** Method according to claim 14,
wherein each subframe comprises a slot and each of the slots comprises one guard interval.

**17.** Subscriber of a cell-based multi-carrier communication system which is designed to communicate with at least one other subscriber of the same communication system by utilizing a method according to one of the claims 1 - 16.

**18.** Subscriber according to claim 17,
wherein the subscriber is a stationary subscriber and especially a base station of the telecommunication system.

**19.** Subscriber according to claim 17,
wherein the subscriber is a mobile subscriber and especially a mobile cell phone.

**20.** Subscriber according to any one of the claims 17 - 19,
wherein an evaluation device is provided to determine the distance to and/or signal delay between a first and a second subscriber.

**21.** Subscriber according to any one of the claims 21 - 20,
wherein a comparing device is provided to compare the determined delay with a fixed delay threshold value.

**22.** Subscriber according to any one of the claims 17 - 21,
wherein a setting device is provided to set the duration of the guard interval used within this communication link.

**23.** Subscriber according to any one of the claims 21 - ##,
wherein the functionality of the evaluation device, comparing device and setting device are implemented in a program controlled device.

**24.** Cell-based multi-carrier communication system, comprising:

a first and at least a second subscriber designed to communicate with each other via a corresponding communication link, wherein at least one of the first and second subscribers are of the kind of a subscriber according to one of the claims 17 to 23.

**25.** Communication system according to one of claim 24,
wherein the communication system is a wireless communication system and especially a wireless UTRA-system.

**26.** System according to one of claims 24 or 25, wherein the communication system operates on the basis of an orthogonal FDMA-communication.

# FIG 1

0.5 ms - Downlink sub-frame with normal CP length

| CP 1 | Symbol#1 | CP 2 | Symbol#2 | CP 3 | Symbol#3 | CP 4 | Symbol#4 | CP 5 | Symbol#5 | CP 6 | Symbol#6 | CP 7 | Symbol#7 |

0.5 ms - Downlink sub-frame with extended CP length

| CP1 | Symbol#1 | CP 2 | Symbol#2 | CP 3 | Symbol#3 | CP 4 | Symbol#4 | CP 5 | Symbol#5 | CP 6 | Symbol#6 |

0.5 ms - Downlink sub-frame with super extended CP length

| CP1 | Symbol#1 | CP2 | Symbol#2 | CP3 | Symbol#3 |

EP 1 942 623 A1

# FIG 2

EP 1 942 623 A1

0.5 ms - Uplink sub-frame with normal CP length

| CP 1 | LB#1 | CP 2 | SB#1 | CP 3 | LB#2 | CP 4 | LB#3 | CP 5 | LB#4 | CP 6 | LB#5 | CP 7 | SB#2 | CP 8 | LB#6 |

0.5 ms - Uplink sub-frame with extended CP length

| CP1 | LB#1 | CP2 | SB#1 | CP3 | LB#2 | CP4 | LB#3 | CP5 | LB#4 | CP6 | SB#2 | CP7 | LB#5 |

# FIG 3

# FIG 4

EP 1 942 623 A1

# FIG 5

**European Patent Office**

# EUROPEAN SEARCH REPORT

Application Number

EP 07 00 0278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 233 566 A1 (MATSUSHITA ELECTRIC IND CO LTD [JP]) 21 August 2002 (2002-08-21)<br><br>* paragraph [0036] *<br>* paragraph [0046] - paragraph [0048]; figure 7 *<br>----- | 1-5,10, 12, 17-19, 22,24-26 | INV.<br>H04L27/26 |
| E | EP 1 746 743 A (MITSUBISHI ELECTRIC INF TECH [NL]; MITSUBISHI ELECTRIC CORP [JP]) 24 January 2007 (2007-01-24)<br>* abstract; figures 1,2,4 *<br>* paragraph [0003] - paragraph [0005] *<br>* paragraph [0046] - paragraph [0066] *<br>----- | 1-5, 17-20, 22,24-26 | |
| X | US 2006/013325 A1 (AGRAWAL AVNEESH [US] ET AL) 19 January 2006 (2006-01-19)<br><br>* abstract; claims 9-12; figures 6a-6e *<br>* paragraph [0006] - paragraph [0009] *<br>* paragraph [0031] - paragraph [0032] *<br>* paragraph [0037] - paragraph [0040] *<br>* paragraph [0064] * | 1-5, 10-20, 22,24-26 | |
| Y | | 6-8,21, 23 | TECHNICAL FIELDS SEARCHED (IPC)<br><br>H04L<br>H04B |
| X | WO 2004/086711 A (TELIA AB [SE]; LJUNG RICKARD [SE]; KARLSSON PETER [SE]) 7 October 2004 (2004-10-07)<br>* abstract; claims 1-5; figures 1a,2 *<br>* page 1, line 12 - page 2, line 17 *<br>* page 3, line 29 - page 5, line 5 *<br>* page 6, line 16 - page 7, line 22 *<br>* page 9, line 26 - line 36 *<br>* page 10, line 21 - page 11, line 10; claims 1-5 * | 1-4, 11-20, 22,24-26 | |
| Y | | 6-8,21, 23 | |

-/--

The present search report has been drawn up for all claims

| Place of search | Date of completion of the search | Examiner |
|---|---|---|
| Munich | 10 May 2007 | Staeger, Rainer |

EPO FORM 1503 03.82 (P04C01)

**European Patent Office**

**EUROPEAN SEARCH REPORT**

Application Number

EP 07 00 0278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/002726 A1 (ZANGI KAMBIZ C [US]) 4 January 2007 (2007-01-04) * the whole document * ----- | 6-8,21, 23 | |
| | | | **TECHNICAL FIELDS SEARCHED (IPC)** |

The present search report has been drawn up for all claims

| Place of search | Date of completion of the search | Examiner |
|---|---|---|
| Munich | 10 May 2007 | Staeger, Rainer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 07 00 0278

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2007

| Patent document cited in search report | | | Publication date | Patent family member(s) | | | Publication date |
|---|---|---|---|---|---|---|---|
| EP | 1233566 | A1 | 21-08-2002 | AU | 9228301 | A | 15-04-2002 |
| | | | | CN | 1393078 | A | 22-01-2003 |
| | | | | WO | 0230034 | A1 | 11-04-2002 |
| | | | | JP | 3526265 | B2 | 10-05-2004 |
| | | | | JP | 2002111639 | A | 12-04-2002 |
| | | | | US | 2002191633 | A1 | 19-12-2002 |
| EP | 1746743 | A | 24-01-2007 | JP | 2007037128 | A | 08-02-2007 |
| | | | | US | 2007019667 | A1 | 25-01-2007 |
| US | 2006013325 | A1 | 19-01-2006 | NONE | | | |
| WO | 2004086711 | A | 07-10-2004 | EP | 1611723 | A1 | 04-01-2006 |
| | | | | SE | 527445 | C2 | 07-03-2006 |
| | | | | SE | 0300824 | A | 26-09-2004 |
| US | 2007002726 | A1 | 04-01-2007 | WO | 2007004031 | A1 | 11-01-2007 |

EP 1 942 623 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **L. J. GREENSTEIN et al.** A New Path-Gain/Delay-Spread propagation model for digital cellular channels. *IEEE Trans. Veh. Technol,* May 1997, vol. 46 (2), 477-485